# EUROPÄISCHE PATENTSCHRIFT

(11) **EP 1 137 585 B1**
(45) Veröffentlichungstag und Bekanntmachung des Hinweises auf die Patenterteilung: **11.09.2002**
(21) Anmeldenummer: 99962208.7
(22) Anmeldetag: 03.12.1999
(51) Int. Cl.: B65G 39/12, B65G 39/14

(54) **FÖRDERGURT-TRAGROLLENSTATION**
CARRIER ROLLER STATION FOR A CONVEYOR BELT
STATION A ROULEAUX PORTEURS POUR COURROIE DE TRANSPORT

(30) Priorität: 08.12.1998 DE 19856625
(43) Veröffentlichungstag der Anmeldung: 04.10.2001
(73) Patentinhaber: Svedala Industri (Deutschland) GmbH, 40231 Düsseldorf (DE)
(72) Erfinder: HASELBÖCK, Dieter, A-1080 Wien (AT); SEVERIN, Jan, 22089 Hamburg (DE); HINKELMANN, Rainer, 21435 Stelle (DE)
(74) Vertreter: Rupprecht, Kay, Dipl.-Ing.
(86) Internationale Anmeldenummer: EP9909470
(87) Internationale Veröffentlichungsnummer: WO00034162

(56) Entgegenhaltungen:
- EP-A- 0 215 851
- BE-A- 530 655
- DE-A- 19 508 646
- GB-A- 2 163 121
- US-A- 5 215 422
- US-A- 5 341 920
- KESSLER F ET AL: "NEUER KURVENGANGIGER GURTFORDERER MIT PENDELNDER AUFHANGUNG" FORDERN UND HEBEN,DE,KRAUSSKOPF VERLAG FUR WIRTSCHAFT. MAINZ, Bd. 44, Nr. 1/02, 1. Januar 1994 (1994-01-01), Seiten 77-80, XP000418491 ISSN: 0341-2636

## Beschreibung

Die vorliegende Erfindung betrifft eine Tragrollenstation für das Obertrum und das Untertrum eines kurvengängigen Fördergurts, mit jeweils wenigstens einer Tragrolle für das Obertrum und das Untertrum, mit je einem, um wenigstens eine in Förderrichtung verlaufende und ggf. auch imaginäre Schwenkachse schwenkbar gelagerten Rahmen, in welchem die dem Obertrum bzw. dem Untertrum zugeordneten Tragrollen mittels je einer quer zur Förderrichtung verlaufenden Achse drehbar gelagert sind.

Derartige Tragrollenstationen sind bekannt und dienen dem Abtragen quersteifer Fördergurte, die in einer horizontalen oder auch dreidimensionalen Kurve geführt werden sollen. Solche Fördergurte können beispielsweise mit Wellenkanten an den beiden Längsseiten ausgerüstet sein, wie sie beispielsweise unter der Marke FLEXOWELL® bekannt sind, und sie können auch zusätzlich mit Querstollen versehen sein. Wenngleich solche Tragrollenstationen grundsätzlich auch getrennt für das Obertrum und das Untertrum des kurvengängigen Fördergurts vorgesehen sein können, wird in Abhängigkeit der örtlichen Einsatzbedingungen überwiegend eine gemeinsame Tragrollenstation für das Obertrum und das Untertrum verwendet. Dies trifft insbesondere, aber nicht ausschließlich im Tunnelbau zu, wo der Fördergurt dem Transport des Abraums dient und häufig durch Tunnelröhren verläuft, deren Durchmesser enge Vorgaben für die Dimensionierung der Tragrollenstationen erzwingt.

Ein Problem bei kurvengängigen Fördergurten besteht darin, daß die Gurtzugkräfte in einer Kurve eine radial zum Kurvenmittelpunkt gerichtete Kraftkomponente bewirken, welche sich negativ auf die Spurtreue des Fördergurts auswirkt. Um diese Kraftkomponente auszugleichen und damit dafür zu sorgen, daß der Fördergurt in der für ihn vorgesehenen Förderbahn verbleibt, sind aus dem Stand der Technik eine Reihe unterschiedlicher Lösungsansätze bekannt. Beispielsweise werden Kurvenanlagen für gemuldete Gurte überwiegend mit solchen Tragrollen installiert, die in einem bestimmten Winkel zur Hauptförderebene angeordnet sind. Die Tragrollenstationen sind dabei an einen bestimmten Betriebszustand angepaßt. Der Nachteil dieses Lösungsansatzes besteht darin, daß die Spurtreue des Fördergurts nur in diesem Ideal-Betriebszustand gewährleistet ist, jedoch nicht mehr, wenn sich beispielsweise eine von diesem Ideal-Betriebszustand abweichende Beladung des Fördergurts mit Fördergut ergibt.

Aus dem Stand der Technik sind ferner Tragrollenstationen mit einer automatischen Anpassung der Tragrollenneigung in Abhängigkeit der Gurtzug- und -gewichtskräfte bekannt. Hierzu sind die Rahmen, in welchen die dem Obertrum bzw. dem Untertrum zugeordneten Tragrollen drehbar gelagert sind, auf verschiedenste Arten ihrerseits quer zur Förderrichtungschwenkbar gelagert.

Aus der BE-PS 530 655 ist beispielsweise eine Tragrollenstation für einen kurvengängigen Fördergurt bekannt, die einen Tragrahmen aufweist, in welchem das Ober- und das Untertrum mittels Rollen gehalten und geführt sind, wobei der Tragrahmen symmetrisch oder asymmetrisch ausgebildet und die Asymmetrie einen Anstellwinkel des Obertrums enthalten kann. Der Tragrahmen dieser bekannten Tragrollenstation kann einen kreissegmentförmigen Bügel aufweisen, der mittels Rollen in einer ebenfalls kreissegmentförmigen Bahn bewegbar ist, um den Fördergurt (Ober- und Untertrum gemeinsam) um eine parallel zur Längsrichtung verlaufende Schwenkachse zu kippen. Die US-A-3,856,133 offenbart eine Tragrollenstation für einen kurvengängigen Fördergurt, bei der die Kurvenaußenseite gegenüber der -innenseite erhöht ist, so daß die Fördergurtebene insgesamt geneigt ist, wobei die erhöhte Seite durch eine Spiralfeder gestützt ist, die - je nach Belastung des Fördergurts mit Fördergut - eine unterschiedliche Neigung hervorruft.

Aus der EP 0 215 851 A1 ist eine Tragrollenstation für das Obertrum und das Untertrum eines kurvengängigen Fördergurtes gemäß dem Oberbegriff des Anspruchs 1 bekannt, mit jeweils einer Tragrolle für das Obertrum und das Untertrum, und mit je einem, um wenigstens eine in Förderrichtung verlaufende und ggf. auch imaginäre Schwenkachse schwenkbar gelagerten Rahmen (dort "Rollenstation" genannt), in welchen die dem Obertrum bzw. dem Untertrum zugeordneten Tragrollen mittels je einer quer zur Förderrichtung verlaufenden Achse drehbar gelagert sind. Die Nachteile dieser bekannten Tragrollenstation liegen insbesondere in einer großen Bauhöhe und -breite, die beide durch die Aufhängung der schwenkbar gelagerten Rahmen an einer weit über dem Obertrum angeordneten Schwenkachse bedingt sind. Zum Erzielen der gewünschten Neigung der Tragrollen schwenken die Rahmen verhältnismäßig weit in Richtung auf den Kurvenmittelpunkt, so daß seitlich des Fördergurts ein erheblicher Platzbedarf besteht.

Darüber hinaus ist als Nachteil sämtlicher vorstehend beschriebener Tragrollenstationen gemäß dem Stand der Technik zu nennen, daß diese überhaupt nur bei gemuldeten Tragrollenstationen funktionieren, bei denen die äußeren Tragrollen seitliche Kräfte aufnehmen können. Demgegenüber würde ein flach geführter Fördergurt in einer Kurve unkontrolliert seitlich auswandern. Ferner kann ein muldungsfähiger Gurt nur sehr geringe seitliche Kräfte über die Gurtkante übertragen, weshalb die Verwendung von permanent wirkenden Seitenführungselementen wegen der relativ hohen auftretenden Seitenkräfte in der Kurve stark eingeschränkt ist.

An dieser Gesamt-Problemstellung setzt die vorliegende Erfindung an, als deren Aufgabe es angesehen wurde, eine Tragrollenstation für einen kurvengängigen Fördergurt derart auszubilden, daß die Tragrollenstation mit einer geringeren Bauhöhe und einer geringeren Funktionsbreite auskommt.

Diese Aufgabe wird bei einer Tragrollenstation für das Obertrum und das Untertrum eines kurvengängigen Fördergurtes, mit jeweils einer Tragrolle für das Obertrum und das Untertrum, und mit je einem, um wenigstens eine in Förderrichtung verlaufende und ggf. auch imaginäre Schwenkachse schwenkbar gelagerten Rahmen, in welchen die dem Obertrum bzw. dem Untertrum zugeordneten Tragrollen mittels je einer quer zur Förderrichtung verlaufenden Achse drehbar gelagert sind, **erfindungsgemäß dadurch gelöst**, daß die Rahmen in oder an einem Gestell gelagert oder aufgehängt sind, und daß auf der Kurveninnenseite je ein Seitenführungselement auf den Rahmen angeordnet ist, das der Führung der Seitenkante des Obertrums bzw. des Untertrums dient, wobei die in einer Förderbahnkurve durch den Fördergurt auf die Seitenführungselemente wirkende und zum Kurvenmittelpunkt gerichtete Kraft ein Verschwenken der Rahmen zur Folge hat, derart, daß die durch das Obertrum bzw. das Untertrum erzeugte Gewichtskraft-Komponente der zum Kurvenmittelpunkt gerichteten Kraft entgegenwirkt.

Die Vorteile dieser erfindungsgemäßen Tragrollenstation liegen insbesondere darin, daß aufgrund des Gestells eine geringstmögliche Bauhöhe der Tragrollenstation erzielbar ist, und mittels der Seitenführungselemente ein Umsetzen der vom Fördergurt ausgehenden und zum Kurvenmittelpunkt gerichteten Kraft in eine Verschwenkbewegung der Rahmen wesentlich effektiver, als bei den bekannten Tragrollenstationen möglich ist. Durch diese größere Effektivität der Kraftumsetzung in eine Verschwenkbewegung kommen kleinere Schwenkradien zur Anwendung, was wiederum den Vorteil mit sich bringt, daß auf eine physische Schwenkachse weit oberhalb des Obertrums des Fördergurts verzichtet werden kann. Die sich einstellende Neigung der Rahmen und damit der Tragrollen ist umso größer, je stärker die auf die Seitenführungselemente wirkende Kraft ist. Eine solche Tragrollenstation weist somit eine dynamische Ausgleichsvorrichtung auf, die auch bei unterschiedlichen Lastzuständen eine hervorragende Spurtreue des Fördergurts in Kurvenbereichen gewährleistet. In einer Kurve wird hierbei die Wellenkante in an sich bekannter Weise als Tragorgan genutzt, da das Fördergut bei einem seitlich geneigten Gurt nicht nur auf dem Basisgurt, sondern auch auf der Wellenkante liegt.

Vorteilhafte weiterbildungen der erfindungsgemäßen Tragrollenstation sind in den Unteransprüchen angegeben.

So können beispielsweise die Seitenführungselemente Rollen sein, die um eine senkrecht zur Förderhauptebene verlaufende Achse drehbar auf den Rahmen angeordnet sind und auch in Batterien zu jeweils zwei, drei oder vier Stück vorhanden sein können. Alternativ hierzu sind Seitenführungselemente in Form von Führungsschienen denkbar.

Eine erste Art der Umsetzung der auf die Seitenführungselemente wirkenden und zum Kurvenmittelpunkt gerichteten Kraft besteht darin, daß die Seitenführungselemente relativ zu dem zugeordneten Rahmen beweglich ausgebildet sind, und daß für die auf der Kurveninnenseite angeordneten Seitenführungselemente ein Umlenkmechanismus vorgesehen ist, der die Seitenführungskräfte dazu verwendet, den jeweiligen Rahmen zu neigen.

In weiterer Ausgestaltung der vorstehend beschriebenen Weiterbildung ist vorgesehen, daß der Umlenkmechanismus ein Schwenkhebel ist, der an einem Endabschnitt das zugeordnete Seitenführungselement trägt, am anderen Ende eine drehbar gelagerte Rolle aufweist, die auf einer schiefen Ebene abrollt, und der zwischen dem Endabschnitt und der Rolle einen Schwenkpunkt mit dem Rahmen aufweist. Beginnt die Kraft auf das Seitenführungselement zu wirken, neigt sich der oberhalb des Schwenkpunkts befindliche Teil des Schwenkhebels in Richtung des Kurvenmittelpunkts (also in Richtung der wirkenden Kraft), während sich der unterhalb des Schwenkpunktes befindliche Abschnitt des Schwenkhebels in entgegengesetzter Richtung bewegt, woraufhin die am unteren Ende des Schwenkhebels angebrachte Rolle die schiefe Ebene hinaufläuft und somit den Rahmen der Tragrollenstation in eine Neigung versetzt.

Bei zwei der nachstehend noch näher zu beschreibenden Ausführungsformen der erfindungsgemäßen Tragrollenstation ist vorgesehen, daß der Rahmen des Obertrums und der Rahmen des Untertrums um eine gemeinsame, in Förderrichtung verlaufende Schwenkachse schwenkbar sind, die zwischen den beiden Rahmen angeordnet ist. Hierdurch entsteht eine äußerst kompakte Tragrollenstation mit einer sehr geringen Bauhöhe und einer ebenfalls sehr geringen Funktionsbreite.

Vorzugsweise ist eine solche Tragrollenstation mit einer zwischen Ober- und Untertrum angeordneten Schwenkachse mit einer ersten Kolben-/Zylinderanordnung für den Rahmen des Obertrums und mit einer zweiten Kolben-/Zylinderanordnung für den Rahmen des Untertrums ausgerüstet, die jeweils zwischen dem zugeordneten Rahmen und dem Gestell angeordnet sind und ein unabhängiges Verschwenken der beiden Rahmen ermöglichen. Die Kolben-/Zylinderanordnungen können zusammen mit den erfindungsgemäßen Seitenführungselementen als dynamische "Servo-Ausgleichsvorrichtung" angesehen werden, wobei die Kolben-/Zylinderanordnungen auf beliebige Art und Weise in Abhängigkeit der auf die Seitenführungselemente wirkenden Kraft aktiviert werden können.

Zur Befestigung der Kolben-/Zylinderanordnungen ist vorzugsweise vorgesehen, daß jeder Rahmen einen sich vom Boden des entsprechenden Rahmens weg erstreckenden Flansch aufweist, mittels dessen die Rahmen schwenkbar auf der gemeinsamen Schwenkachse sitzen und an denen je eine sich quer zur Schwenkachse erstreckende Hebelstange befestigt ist, deren freies Ende mit der zugeordneten Kolben-/Zylinderanordnung gelenkig gekoppelt ist.

Während, wie vorstehend beschrieben, für den Rahmen des Obertrums und den Rahmen des Untertrums je eine eigene Kolben-/Zylinderanordnung vorgesehen sein kann, ist es alternativ hierzu auch möglich, daß die Rahmen starr miteinander verbunden und gemeinsam mittels einer einzigen Kolben-/Zylinderanordnung verschwenkbar sind.

Ein bevorzugtes Mittel, die Kolben-/Zylinderanordnung jedes Rahmens in Abhängigkeit der auf die Seitenführungselemente wirkenden Kraft zu aktivieren, besteht in einer elektronischen Regelschaltung, die in Abhängigkeit des Ausgangssignals einer Kraftmeßeinrichtung, welche die von dem Fördergurt auf die Seitenführungslemente wirkende Kraft mißt, ein Steuersignal an die zugeordnete Kolben-/Zylinderanordnung abgibt, woraufhin der entsprechende Rahmen geneigt wird, um mit der entstehenden Gewichtskraftkomponente der Seitenführungskraft entgegenzuwirken.

Bei einer anderen Ausführungsform der erfindungsgemäßen Tragrollenstation weist das Gestell pro Trum vier sich quer zur Förderrichtung erstreckende Wangen auf, deren zueinander gewandte Innenseiten je eine Kulisse aufweisen, welche sich in bezug auf die Förderhauptebene unter einem stumpfen Winkel linear oder bogenförmig erstrecken, während der Rahmen des Obertrums und/oder derjenige des Untertrums an seinen den Wangen gegenüberliegenden Endabschnitten Stummelbolzen aufweist, mittels derer der zugehörige Rahmen um eine imaginäre, in Förderrichtung verlaufende Schwenkachse verschwenkbar in den Kulissen gleitend aufgehängt ist. Auch diese Ausführungsform ermöglicht eine äußerst kompakte Bauweise einer Tragrollenstation, bei der oberhalb des Obertrums eine imaginäre, und daher im Hinblick auf die Bauhöhe nicht störende Schwenkachse vorgesehen ist.

Eine weitere Ausführungsform der erfindungsgemäßen Tragrollenstation ist dadurch gekennzeichnet, daß die Rahmen wenigstens zwei Schwenkarme aufweisen, die mit einem Ende an dem Rahmen (des Obertrums) und mit dem anderen Ende an dem Gestell angelenkt sind. Hierbei können die Schwenkarme zwei Abschnitte aufweisen, die einen Winkel, vorzugsweise einen stumpfen Winkel, miteinander einschließen und deren am Gestell angelenkten Abschnitte vorzugsweise zueinander weisen können.

Ein Problem bei den automatischen dynamischen Ausgleichsvorrichtungen ohne "Servo-Einrichtung" in Form von Kolben-/Zylinderanordnungen besteht darin, daß die Lagerung bzw. Aufhängung der Tragrollenrahmen so gestaltet sein muß, daß die vom Fördergurt ausgeübten Seitenführungskräfte ausreichen, auch eine ausreichende Neigung der Tragrollenrahmen zu bewirken. In dieser Hinsicht leistet eine andere Weiterbildung aufgrund der dadurch erzielten Hebelwirkung einen Beitrag, bei der vorgesehen ist, daß sich die am Gestell angelenkten Abschnitte der Schwenkarme überkreuzen. Wegen der Hebelwirkung ist somit die für eine Neigung der Rahmen erforderliche Seitenführungskraft wesentlich geringer.

Eine andere Ausführungsform sieht vor, daß der Rahmen des Obertrums mittels der Schwenkarme an dem Gestell und der Rahmen des Untertrums an dem Rahmen des Obertrums aufgehängt ist, wodurch eine kaskadenartige Struktur entsteht. Alternativ hierzu kann vorgesehen sein, daß beide Tragrollenrahmen separat mittels der Schwenkarme an dem Gestell aufgehängt sind.

Eine andere Weiterbildung sieht vor, daß die Schenkarme zwischen den Böden der Rahmen und je einem Querträger des Gestells angeordnet sind, so daß sich die Tragrollenrahmen auf den Schwenkarmen abstützen, und daß die Mittellage jedes Rahmens durch eine Balancevorrichtung eingestellt wird. Diese Balancevorrichtung kann entweder aus paarweise angeordneten Spiralfedern oder aber auch aus entsprechend angeordneten Kolben-/Zylinderanordnungen bestehen.

Eine Tragrollenstation der erfindungsgemäßen Art, die in ihrer vorstehend beschriebenen Funktion als Ausgleichsvorrichtung einen quersteifen Basisgurt erfordert, kann auch als Gurtlenkstation konventioneller Fördergurte, und dort vorwiegend im Untertrum verwendet werden. Bei den hierzu bekannten Konstruktionen ist die Tragrollendrehachse um eine senkrecht zu ihr verlaufende weitere Drehachse drehbar. Durch Anstellen der Tragrollendrehachse relativ zur Förderrichtung in einem Winkel ≠ 90° wird der Fördergurt aufgrund der an den Seitenführungselementen entstehenden Reibungskräfte nach rechts oder nach links gesteuert. Dieses bekannte System hat den Nachteil, daß die gewünschte Steuerwirkung bei unterschiedlichen Reibungskoeffizienten zwischen Tragrolle und Gurt (z. B. trocken - naß) unterschiedlich sein kann. Dieser Nachteil wird durch die Verwendung der erfindungsgemäßen Tragrollenstation als Gurtlenkstation vermieden.

Im folgenden werden einige bevorzugte Ausführungsbeispiele der Erfindung anhand einer Zeichnung näher erläutert.

Es zeigen:
- Fig. 1: ein erstes Ausführungsbeispiel einer Tragrollenstation für einen kurvengängigen Fördergurt mit mittigem Schwenkpunkt und einer "Servo-Ausgleichsvorrichtung";
- Fig. 2: eine Seitenansicht der Tragrollenstation gem. Fig. 1;
- Fig. 3: ein zweites Ausführungsbeispiel einer Tragrollenstation für einen kurvengängigen Fördergurt mit mittigem Drehpunkt und gekoppeltem Ober- und Untertrum;
- Fig. 4: ein drittes Ausführungsbeispiel einer Tragrollenstation für einen kurvengängigen Fördergurt mit Kulissenführung;
- Fig. 5: die Tragrollenstation gem. Fig. 4 mit geneigtem Ober und Untertrum;
- Fig. 6: eine Draufsicht auf die Tragrollenstation gem. Fig. 4;
- Fig. 7: ein viertes Ausführungsbeispiel einer Tragrollenstation für einen kurvengängigen Fördergurt mit zwei Schwenkachsen pro Rahmen und gekoppeltem Ober- und Untertrum;
- Fig. 8: die Tragrollenstation gem. Fig. 7 im geneigten Zustand;
- Fig. 9: ein fünftes Ausführungsbeispiel einer Tragrollenstation für einen kurvengängigen Fördergurt mit einer trapezförmigen Anordnung der Schwenkarme;
- Fig. 10: die Tragrollenstation gem. Fig. 9 im geneigten Zustand;
- Fig. 11: ein sechstes Ausführungsbeispiel einer Tragrollenstation für einen kurvengängigen Fördergurt mit sich überkreuzenden, abgewinkelten Schwenkarmen;
- Fig. 12: die Tragrollenstation gem. Fig. 11 im geneigten Zustand;
- Fig. 13: eine Detail-Darstellung einer Tragrollenstation mit einer automatischen dynamischen Ausgleichsvorrichtung; und
- Fig. 14: ein Blockschaltbild einer elektronischen Regelschaltung für die Tragrollenstationen gemäß den Figuren 1 bis 3.

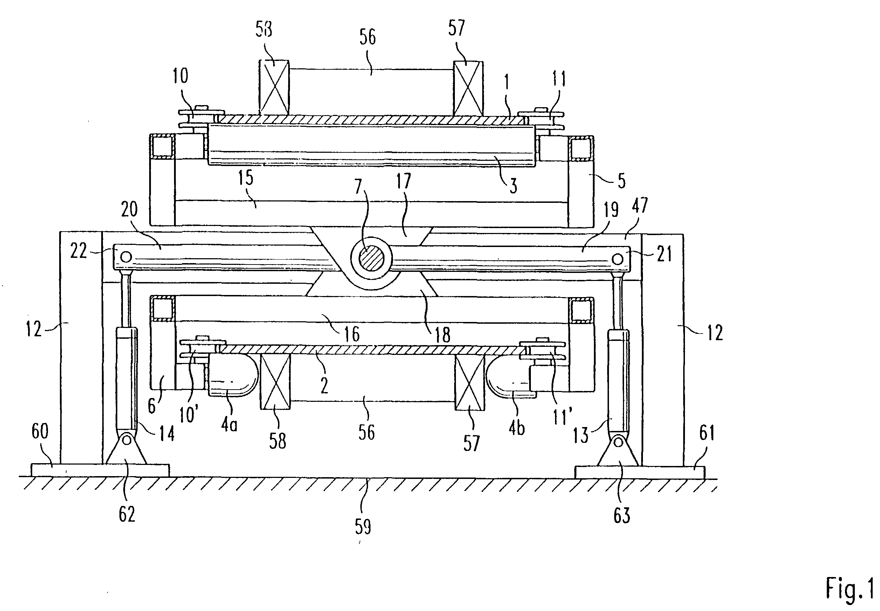

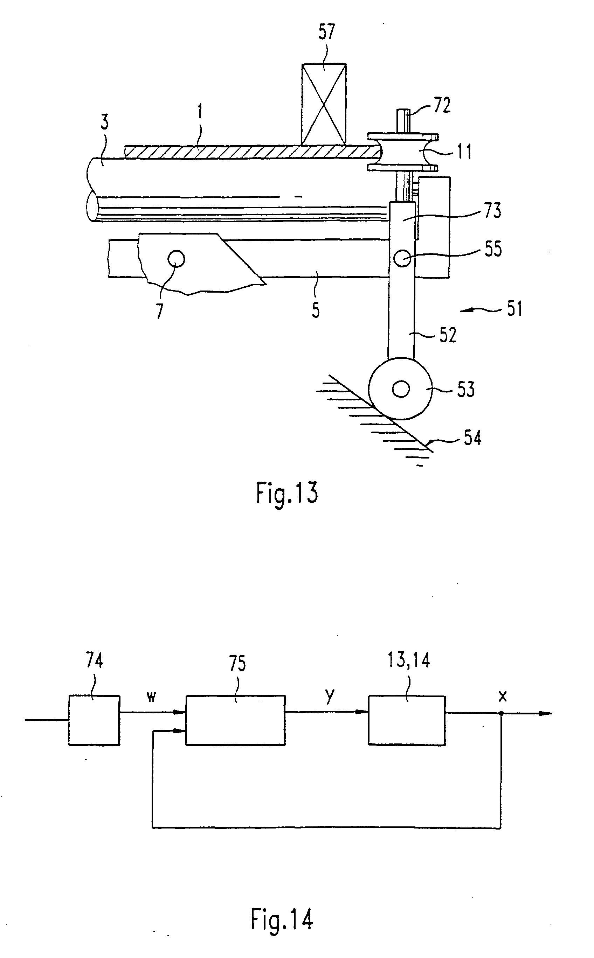

Fig. 1 zeigt ein erstes Ausführungsbeispiel einer Tragrollenstation für das Obertrum 1 und das Untertrum 2 eines kurvengängigen Fördergurtes, mit einer Tragrolle 3 für das Obertrum 1 und mit einer in zwei Stummelrollen 4a, 4b aufgeteilten Tragrolle für das Untertrum 2. Die Tragrolle 3 für das Obertrum 1 und die geteilte Tragrolle 4a, 4b für das Untertrum 2 sind jeweils in einem Rahmen 5, 6 um jeweils eine quer zur Förderrichtung verlaufende Achse drehbar gelagert. Die Rahmen 5, 6 sind ihrerseits um eine gemeinsame und zwischen dem Boden 15 des Rahmens 5 und dem Boden 16 des Rahmens 6 angeordnete und in Förderrichtung verlaufende Schwenkachse 7 an einem Querträger 47 eines Gestells 12 gelagert bzw. aufgehängt, welches sich über Basisplatten 60, 61 auf dem Untergrund 59 abstützt. An den Böden 15, 16 der Rahmen 5, 6 ist jeweils ein Flansch 17, 18 befestigt, der sich von dem jeweiligen Boden 15, 16 weg erstreckt und mittels dessen die Rahmen 5, 6 schwenkbar auf der gemeinsamen Schwenkachse 7 sitzen. An den Flansch 17 des Rahmens 5 ist eine sich quer zur Schwenkachse 7 erstreckende Hebelstange 19 befestigt, deren freies Ende 21 gelenkig mit einer zugeordneten Kolben-/Zylinderanordnung 13 gekoppelt ist, die sich ihrerseits mittels eines Flansches 63 und einer Basisplatte 65 auf dem Untergrund 59 abstützt. In ähnlicher Weise ist der Flansch 18 des Rahmens 6 mit einer sich quer zur Schwenkachse 7 erstreckenden Hebelstange 20 verbunden, deren freies Ende 22 gelenkig mit einer zugeordneten Kolben-/Zylinderanordnung 14 gekoppelt ist, die sich ihrerseits wieder mittels eines Flansches 62 und einer Basisplatte 66 auf dem Untergrund 59 abstützt. Die Kolben-/Zylinderanordnungen 13, 14 bilden zusammen mit den Hebelstangen 19, 20 eine "Servo-Ausgleichsvorrichtung", deren Funktionsweise nachstehend noch anhand Fig. 14 erläutert werden wird.

Zu beiden Längsseiten des Obertrums 1 und des Untertrums 2 sind auf den entsprechenden Rahmen 5, 6 Seitenführungselemente 10, 10'; 11, 11' angeordnet, welche der Führung der Seitenkante des Fördergurts dienen. In einer Kurve bewirken die Gurtzug- und Gewichtskräfte eine radial zum Kurvenmittelpunkt gerichtete Kraftkomponente, welche auf die Seitenführungselemente 10, 10'; 11, 11' wirkt und im Zusammenwirken mit einer Regelschaltung gem. Fig. 14 und mit der aus den Kolben-/Zylinderanordnungen 13, 14 und den Hebelstangen 19, 20 bestehenden "Servo-Ausgleichsvorrichtung" eine Neigung der Rahmen 5, 6 zur Folge hat, und zwar derart, daß die durch das Obertrum 1 bzw. das Untertrum 2 erzeugte Gewichtskraft-Komponente der zum Kurvenmittelpunkt gerichteten Kraft entgegenwirkt und diese im Idealfall ausgleicht.

Auf dem Obertrum 1 bzw. dem Untertrum 2 sind in an sich bekannter Weise Querstollen 56 und Wellenkanten 57, 58 angeordnet, die hier nicht erkennbare Compartments zur Aufnahme des Förderguts bilden.

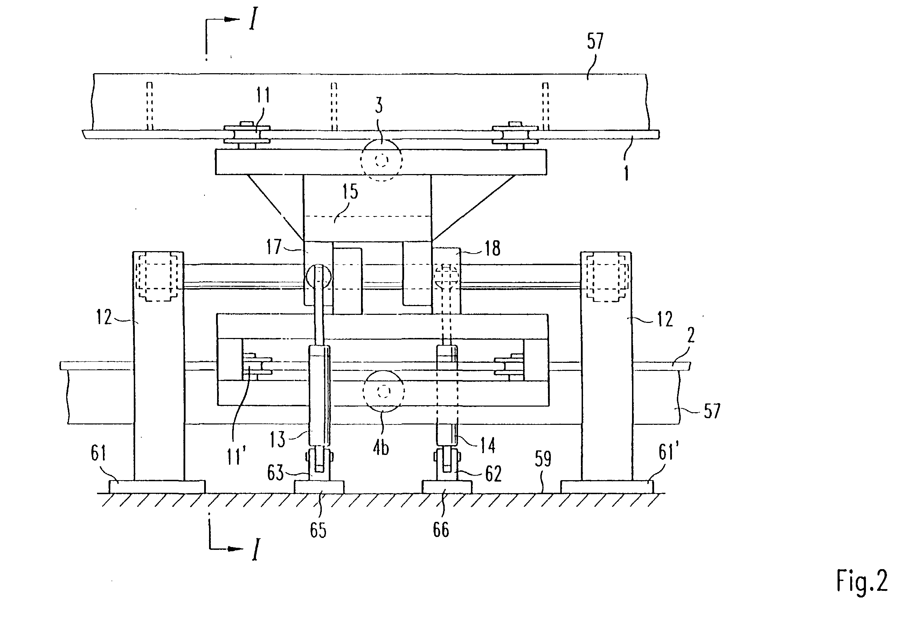

Fig. 2 zeigt eine Seitenansicht der Tragrollenstation gem. Fig. 1. Anhand dieser Darstellung ist der Aufbau des Gestells 12 erkennbar, welches mittels seiner vier Pfosten, von denen hier nur zwei erkennbar sind, und entsprechenden Basisplatten, von denen hier nur die Basisplatten 61, 61' erkennbar sind, auf dem Untergrund 59 ruht. Weiterhin ist hier ersichtlich, daß die Kolben-/Zylinderanordnungen 13, 14 gelenkig in den Flanschen 63, 62 gelagert sind und sich über Basisplatten 65, 66 auf dem Untergrund 59 abstützen.

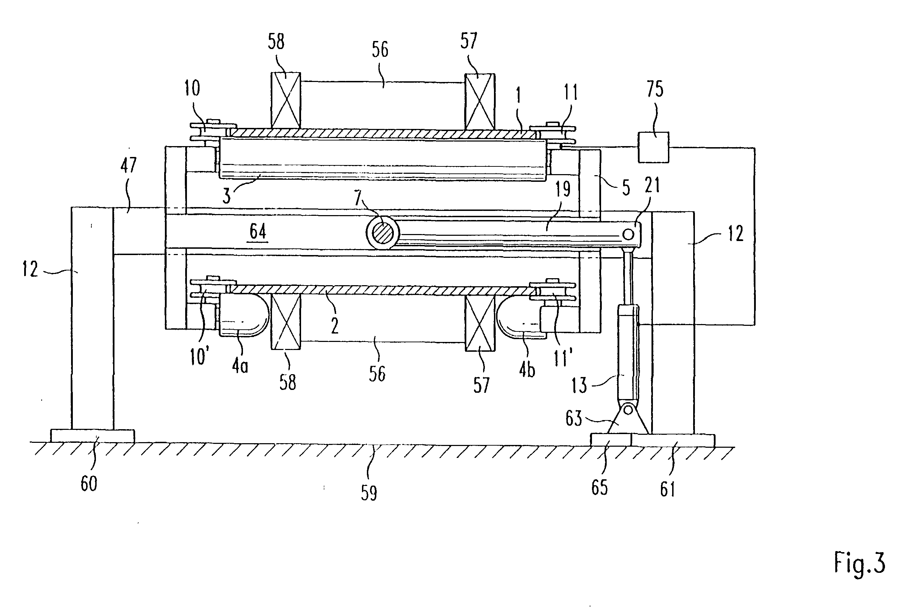

Fig. 3 zeigt ein zweites Ausführungsbeispiel einer Tragrollenstation für einen kurvengängigen Fördergurt, welches sich von dem ersten Ausführungsbeispiel der Figuren 1 und 2 dadurch unterscheidet, daß die Rahmen 5, 6 hier mittels eines Rahmenquerträgers 64 starr gekoppelt sind und nur gemeinsam mittels der einzigen Kolben-/Zylinderanordnung 13, die wiederum zusammen mit der Hebelstange 19 eine "Servo-Ausgleichsvorrichtung" bildet, um eine in Förderrichtung verlaufende Schwenkachse 7 verschwenkbar sind.

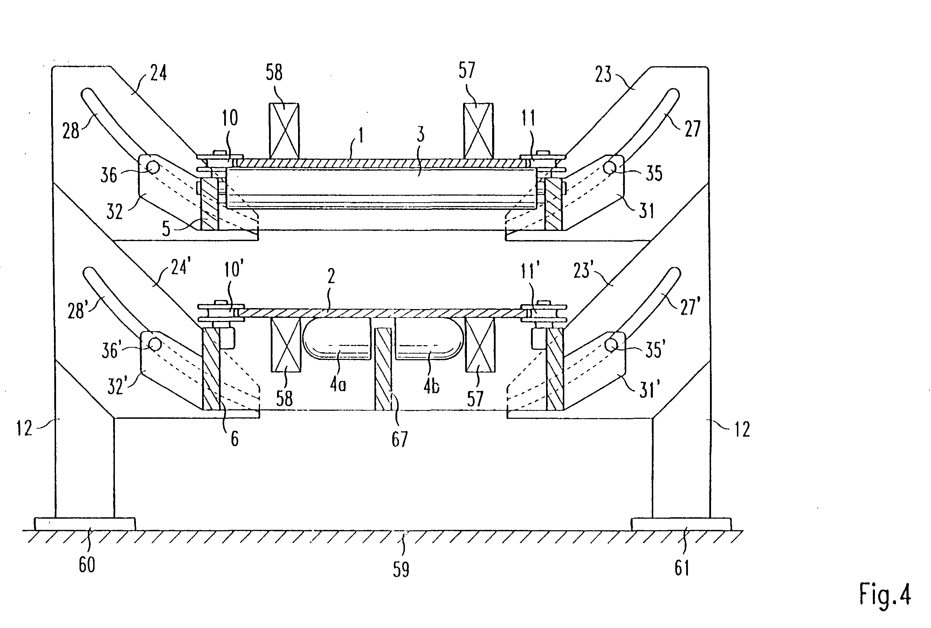

Fig. 4 zeigt ein drittes Ausführungsbeispiel einer Tragrollenstation für das Obertrum 1 und das Untertrum 2 eines kurvengängigen Fördergurtes, bei der der Rahmen 5 des Obertrums 1 und der Rahmen 6 des Untertrums 2 unabhängig voneinander in Kulissenführungen gelagert sind, die im folgenden beschrieben werden. Das Gestell 12 der Tragrollenstation weist für das Obertrum 1 vier sich quer zur Förderrichtung erstreckende Wangen 23 bis 26 auf, deren zueinander gewandte Innenseiten je eine Kulisse 27 bis 30 aufweisen, welche sich in bezug auf die Förderhauptebene unter einem stumpfen Winkel bogenförmig erstrekken. Der dem Obertrum 1 zugeordnete Rahmen 5 weist an seinen den Wangen 23 bis 26 gegenüberliegenden Endabschnitten 31 bis 34 Stummelbolzen 35 bis 38 auf, mittels derer der Rahmen 5 um eine imaginäre, in Förderrichtung oberhalb des Obertrums 1 verlaufende Schwenkachse verschwenkbar in den Kulissen 27 bis 30 gleitend aufgehängt ist. In ähnlicher Weise weist das Gestell 12 für das Untertrum 2 vier sich quer zur Förderrichtung erstreckende Wangen 23' bis 26' auf, deren zueinander gewandte Innenseiten je eine Kulisse 27' bis 30' aufweisen, welche sich in bezug auf die Förderhauptebene unter einem stumpfen Winkel bogenförmig erstrecken. Der Rahmen 6 des Untertrums 2 weist an seinen den Wangen 23' bis 26' gegenüberliegenden Endabschnitten 31' bis 34' Stummelbolzen 35' bis 38' auf, mittels derer der Rahmen 6 ebenfalls um eine imaginäre, in Förderrichtung oberhalb des Obertrums 1 verlaufende Schwenkachse verschwenkbar in den Kulissen 27' bis 30' gleitend aufgehängt ist.

Im Gegensatz zu den vorangegangenen Ausführungsbeispielen weist der Fördergurt hier keine Querstollen zwischen den Wellenkanten 57, 58 auf, weshalb die Stummelrollen 4a, 4b hier mittig an einem Träger 67 drehbar befestigt sind. Selbstverständlich wäre aber auch bei diesem Ausführungsbeispiel ein Fördergurt mit Querstollen einsetzbar, für den die Stummelrollen 4a, 4b des Untertrums 2 dann wieder außen angeordnet wären, wie in den Figuren 1 - 3 gezeigt.

Wie in den vorangegangenen Ausführungsbeispielen sind auch hier Seitenführungselemente 10, 10'; 11, 11' in Form von Rollen vorgesehen, die um eine senkrecht zur Förderhauptebene verlaufende Achse drehbar auf den Rahmen 5, 6 angeordnet sind. Die Seitenführungselemente 10, 10'; 11, 11' nehmen die in einer Kurve radial zum Kurvenmittelpunkt gerichtete Kraft auf und setzen diese in eine Schwenkbewegung um die imaginäre Schwenkachse um, welche zur Folge hat, daß die durch das Obertrum 1 bzw. das Untertrum 2 erzeugte Gewichtskraft-Komponente der auf die Seitenführungselemente 10, 10'; 11, 11' wirkenden und zum Kurvenmittelpunkt gerichteten Kraft entgegenwirkt.

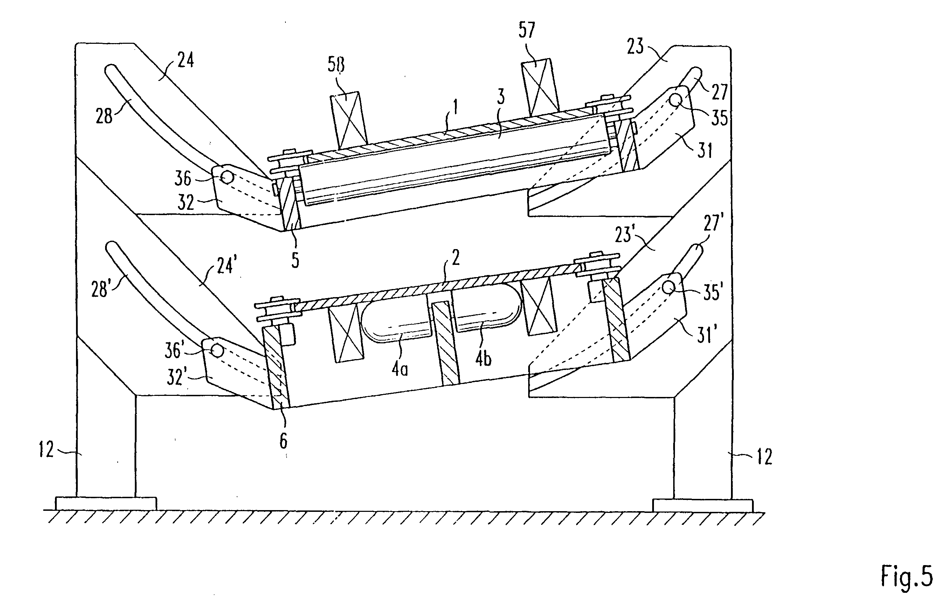

Fig. 5 zeigt den Rahmen 5 des Obertrums 1 und den Rahmen 6 des Untertrums 2 in unterschiedlich stark geneigten Stellungen. Die unterschiedliche Neigung kommt dadurch zustande, daß die durch das Obertrum 1 erzeugten Kräfte wegen der zusätzlichen Beladung mit Fördergut größer sind als die im Untertrum 2.

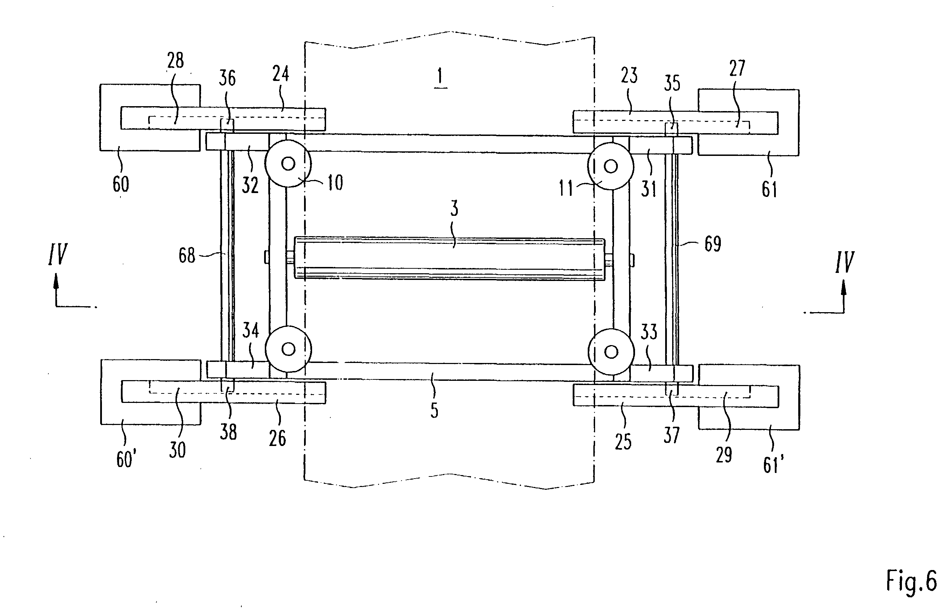

Fig. 6 zeigt eine Draufsicht auf die Tragrollenstation gem. Fig. 4. Anhand dieser Darstellung ist die Lage der jeweils vier Wangen 23 bis 26 des Gestells 12, ferner die Lage der in den Wangen ausgebildeten Kulissen 27 bis 30, ferner die den Wangen 23 bis 26 gegenüberliegenden Endabschnitte 31 bis 34 des Rahmens 5 und schließlich der Eingriff der Stummelbolzen 35 bis 38 in die Kulissen 27 bis 30 verdeutlicht. Zur Stabilisierung sind die einander gegenüberliegenden Endabschnitte 31 und 33 bzw. 32 und 34 durch je eine Stange 69, 68 miteinander verbunden.

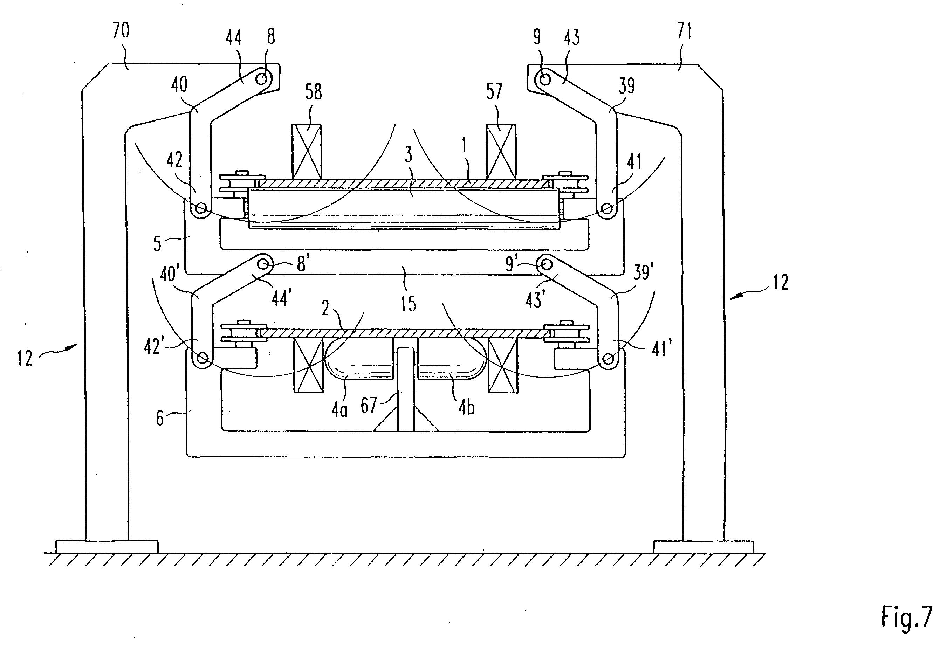

Fig. 7 zeigt ein viertes Ausführungsbeispiel einer Tragrollenstation für das Obertrum 1 und das Untertrum 2 eines kurvengängigen Fördergurtes, bei der die Obertrum-Lagerung und die Untertrum-Lagerung miteinander gekoppelt sind. In diesem Ausführungsbeispiel weisen die Rahmen 5, 6 jeweils wenigstens zwei Schwenkarme 39, 40; 39', 40' auf, wobei die Schwenkarme 39, 40 des Obertrumrahmens 5 mit einem Endabschnitt 41, 42 an dem Rahmen 5 und mit dem anderen Endabschnitt 43, 44 an dem Gestell 12 angelenkt sind, und die Schwenkarme 39', 40' des Untertrumrahmens 6 mit einem Endabschnitt 41', 42' an dem Rahmen 6 und mit dem anderen Endabschnitt 43', 44' an dem Boden 15 des Obertrumrahmens 5. Somit entsteht eine kaskadenartige Aufhängung des Obertrumrahmens 5 und des Untertrumrahmens 6 an den beiden Davids 70, 71 des Gestells 12. In diesem vierten Ausführungsbeispiel der Tragrollenstation sind die Endabschnitte 41, 42; 41', 42' bzw. 43, 44; 43', 44' der Schwenkarme 39, 40; 39', 40' unterschiedlich lang ausgebildet, schließen einen stumpfen Winkel miteinander ein, und die am Gestell angelenkten Endabschnitte 43, 44 der Schwenkarme 39, 40 sowie die entweder am Gestell 12 oder am Boden 15 des Obertrumrahmens 5 angelenkten Endabschnitte 43', 44' weisen jeweils zueinander. Die Schwenkkreise der Aufhängungen des Rahmens 5 bzw. des Rahmens 6 zeigen, daß die Rahmen bei diesem Ausführungsbeispiel um zwei in Förderrichtung verlaufende Schwenkachsen neigbar sind.

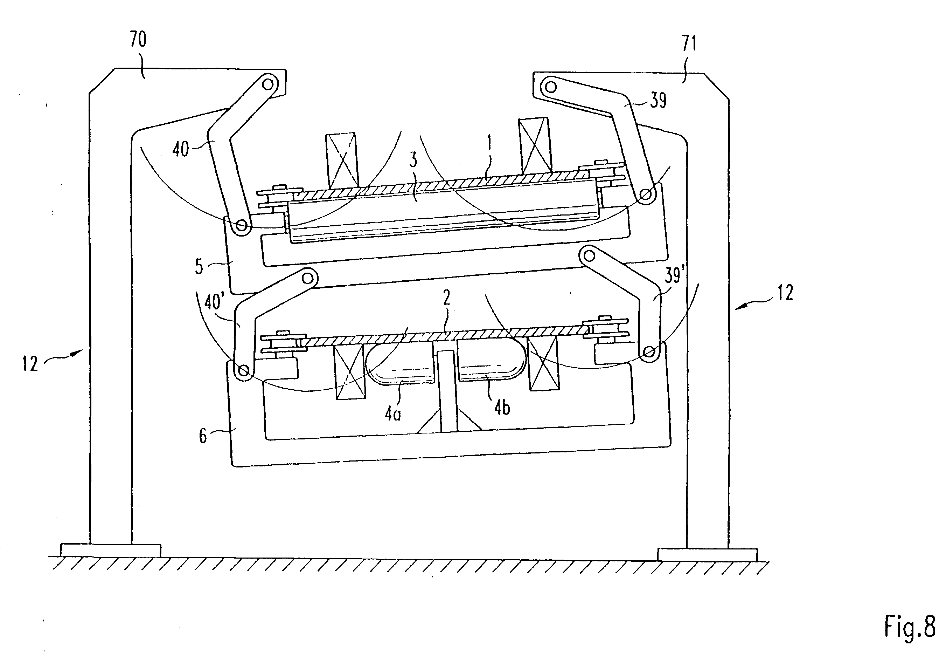

Fig. 8 zeigt die Tragrollenstation gem. Fig. 7 im ausgelenkten Zustand. Auch hier ist die Neigung des Untertrumrahmens 6 geringer als die des Obertrumrahmens 5, da die im Untertrum 2 wirkenden Gewichtskräfte wegen der fehlenden Beladung des Fördergurts geringer sind, als im Obertrum 1.

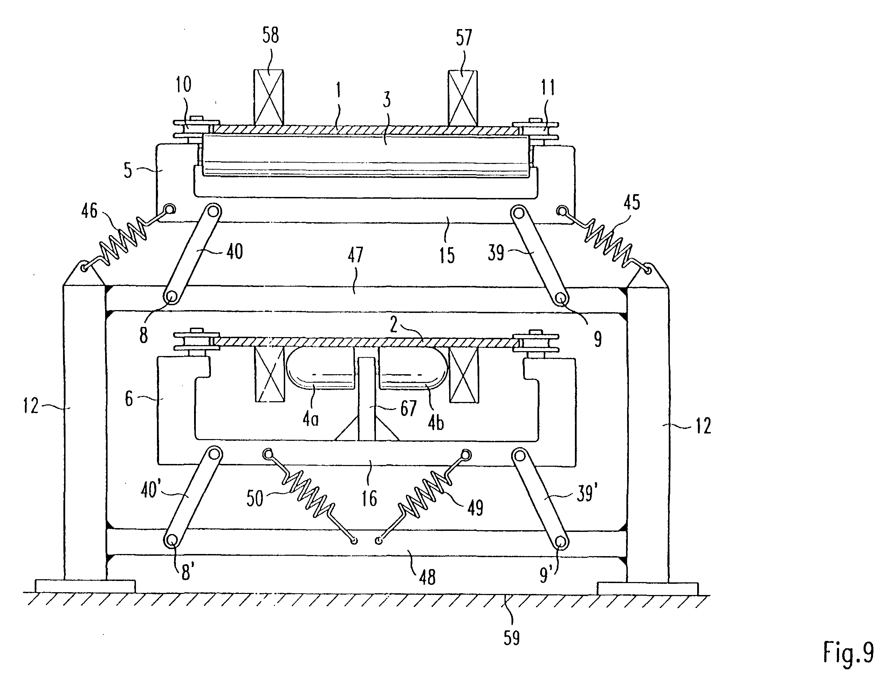

Fig. 9 zeigt ein fünftes Ausführungsbeispiel einer Tragrollenstation für einen kurvengängigen Fördergurt mit einer trapezförmigen Anordnung der Rahmen 5, 6 auf Querträgern 47, 48 des Gestells 12. Hier sind die Schwenkarme 39, 40 des Rahmens 5 des Obertrums 1 zwischen dem Boden des Rahmens 5 und einem ersten Querträger 47 des Gestells 12 angeordnet, während die Schwenkarme 39', 40' des Rahmens 6 des Untertrums 2 zwischen dem Boden 16 des Rahmens 6 und einem zweiten Querträger 48 angeordnet sind. Da somit ohne weitere Hilfsmittel eine instabile Lagerung der Rahmen 5, 6 gegeben wäre, ist eine Balancevorrichtung vorgesehen, die in diesem Ausführungsbeispiel aus paarweise angeordneten Spiralfedern 45, 46; 49, 50 besteht. Alternativ hierzu könnte die Balancevorrichtung auch durch je eine Kolben-/Zylinderanordnung realisiert werden, die hier nicht dargestellt sind.

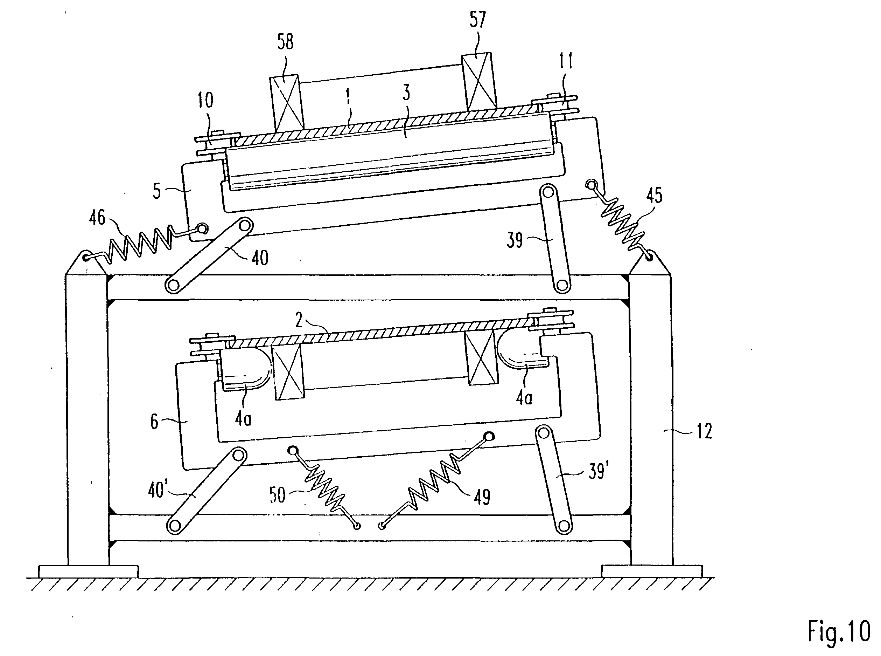

Fig. 10 zeigt die Tragrollenstation gem. Fig. 9 in ausgelenktem Zustand, wobei auch hier die Neigung des Untertrums 2 geringer ist, als die Neigung des Obertrums 1.

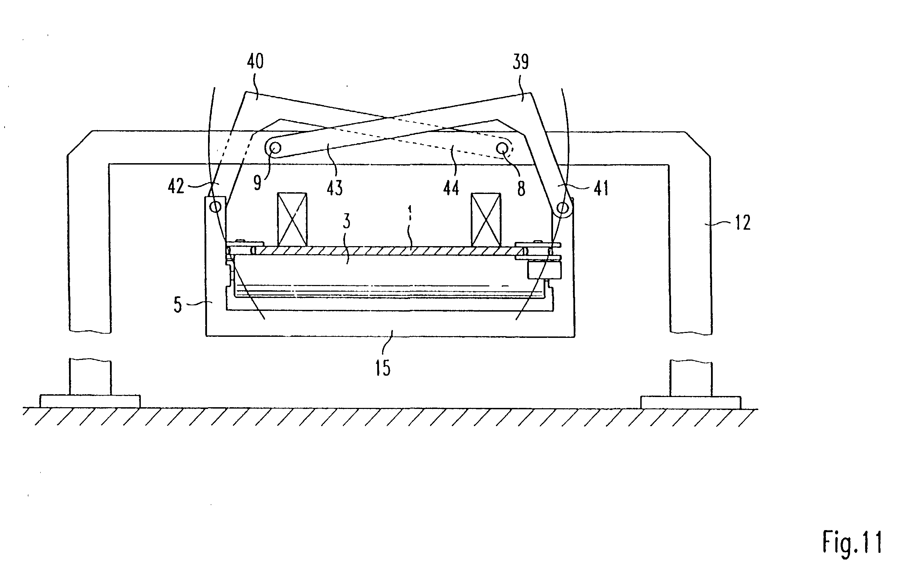

Fig. 11 zeigt ein sechstes Ausführungsbeispiel einer Tragrollenstation für einen kurvengängigen Fördergurt, wobei hier zur Vereinfachung lediglich die Lagerung des Obertrumrahmens 5 dargestellt ist. Dieses Ausführungsbeispiel ist im Prinzip ähnlich wie das vierte Ausführungsbeispiel gemäß den Figuren 7 und 8, wobei sich hier beim sechsten Ausführungsbeispiel die am Gestell 12 angelenkten Endabschnitte 43, 44 der Schwenkarme 39, 40 überkreuzen. Anhand der eingezeichneten Schwenkkreise ist ohne weiteres ersichtlich, daß durch diese Art der Aufhängung in einer Kurve eine sehr geringe Auslenkung des Rahmens 5 erfolgt. Die Aufhängung des Untertrumrahmens 6 kann in der gleichen Weise entweder ebenfalls am Gestell 12 oder an dem Boden 15 des Rahmens 5 erfolgen.

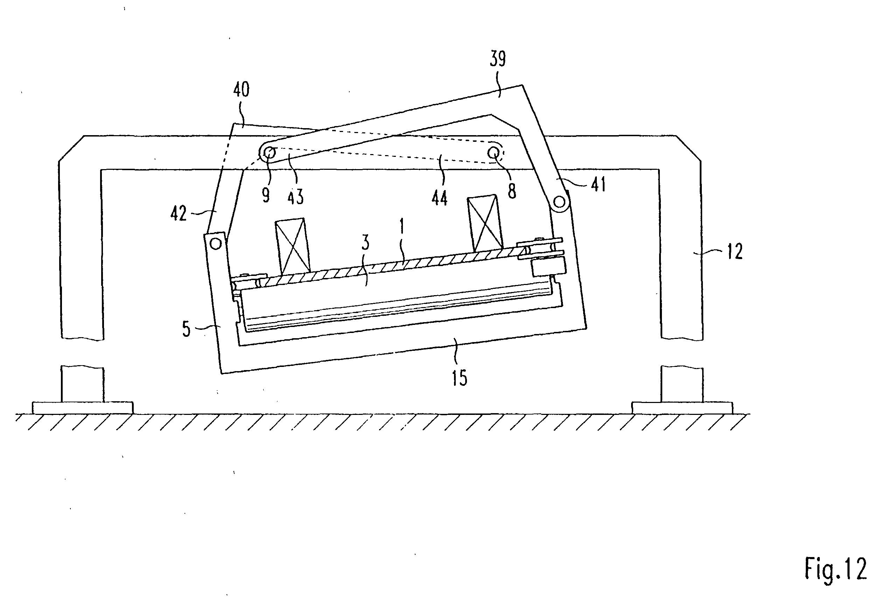

Fig. 12 zeigt die Tragrollenstation gem. Fig. 11 in einem ausgelenkten Zustand.

Fig. 13 zeigt eine Detaildarstellung einer Tragrollenstation mit einer automatischen dynamischen Ausgleichsvorrichtung. Dargestellt ist ein rechter Ausschnitt eines Rahmens 5 für das Obertrum 1, welches wie in den anderen beschriebenen Ausführungsbeispielen über eine Tragrolle 3 verläuft. Das Seitenführungselement 11 in Form einer Rolle ist relativ zu dem Rahmen 5 beweglich und um um eine senkrecht zur Förderhauptebene verlaufende Achse drehbar. Um die in einer Kurve von dem Obertrum 1 auf die Seitenführungselemente (hier ist nur das Seitenführungselement 11 zu sehen) ausgeübte und zum Kurvenmittelpunkt gerichtete Kraft dazu zu verwenden, den Rahmen 5 zur Kurvenaußenseite hin nach oben zu neigen, ist ein Umlenkmechanismus 51 vorgesehen. Dieser Umlenkmechanismus 51 ist ein Schwenkhebel 52, der an einem Endabschnitt 73 das zugeordnete Seitenführungselement 11 trägt und am anderen Ende eine drehbar gelagerte Rolle 53 aufweist, die auf einer schiefen Ebene 54 abrollen kann. Zwischen dem Endabschnitt 73 und der Rolle 53 ist ein Schwenkpunkt 55 mit dem Rahmen 5 vorgesehen, während der Rahmen 5 selbst um die in Förderrichtung verlaufende Schwenkachse 7 verschwenkbar ist. Wenn nun in einer Kurve die radial zum Kurvenmittelpunkt gerichtete Kraftkomponente auf das Seitenführungselement -11 wirkt, wird der obere Endabschnitt 73 des Schwenkhebels 52 ebenfalls zum Kurvenmittelpunkt hin ausweichen, d. h. um den Schwenkpunkt 55 schwenken, woraufhin die Rolle 53 auf der schiefen Ebene 54 aufwärts abrollt und dadurch eine Neigung des Rahmens 5 um die Schwenkachse 7 hervorruft. Bei dieser Bewegung wird das Seitenführungselement 11 in Form der um die Achse 72 drehbaren Rolle auf der Achse 72 geringfügig nach oben ausweichen, was eine kontinuierliche Führung der Seitenkante des Obertrums 1 gewährleistet, die in der Nut der Rolle 11 aufgenommen ist.

Fig. 14 zeigt ein Blockschaltbild für eine elektronische Regelschaltung 75, wie sie für die vorstehend beschriebene "Servo-Ausgleichsvorrichtung" gemäß den Figuren 1 bis 3 verwendet werden kann. Zu dieser Regelschaltung gehören eine Kraftmeßeinrichtung 74, mit welcher die von dem Fördergurt auf die Seitenführungselemente wirkende Kraft gemessen wird. Diese Kraftmeßeinrichtung 74 gibt über die Regelschaltung 75 ein Steuersignal an die zugeordnete Kolben-/Zylinderanordnung 13, 14 ab, woraufhin der entsprechende Rahmen 5, 6 verschwenkt wird, um mit der durch die Neigung des Rahmens entstehenden Gewichtskraftkomponente der Seitenführungskraft entgegenzuwirken. Stellgröße y dieser Regelung ist somit die Stellung des Kolbens zum Zylinder bzw. der Neigungswinkel des jeweiligen Rahmens 5, 6 zur Horizontalebene, Regelgröße x ist die auf die Seitenführungselemente wirkende Kraft bzw. das Ausgangssignal der Kraftmeßeinrichtung 74, und die Fördergröße w dieser Regelung ist ein einstellbarer Maximalwert der auf die Seitenführungselemente wirkenden Kraft, bis zu dessen Erreichen noch keine Änderung der Neigung des jeweiligen Rahmens erforderlich ist.

## Patentansprüche

1. Tragrollenstation für das Obertrum (1) und das Untertrum (2) eines kurvengängigen Fördergurtes, mit jeweils einer Tragrolle (3; 4a, 4b) für das Obertrum (1) und das Untertrum (2), und mit je einem, um wenigstens eine in Förderrichtung verlaufende und ggf. auch imaginäre Schwenkachse (7; 8, 9; 8', 9') schwenkbar gelagerten Rahmen (5, 6), in welchen die dem Obertrum (1) bzw. dem Untertrum (2) zugeordneten Tragrollen (3; 4a, 4b) mittels je einer quer zur Förderrichtung verlaufenden Achse drehbar gelagert sind,
**dadurch gekennzeichnet,**
**daß** die Rahmen (5, 6) in oder an einem Gestell (12) gelagert oder aufgehängt sind, und daß auf der Kurveninnenseite je ein Seitenführungselement (10, 10'; 11, 11') auf den Rahmen (5, 6) angeordnet ist, das der Führung der Seitenkante des Obertrums (1) bzw. des Untertrums (2) dient, wobei die in einer Förderbahnkurve durch den Fördergurt auf die Seitenführungselemente (10, 10'; 11, 11') wirkende und zum Kurvenmittelpunkt gerichtete Kraft ein Verschwenken der Rahmen (5, 6) zur Folge hat, derart, daß die durch das Obertrum (1) bzw. das Untertrum (2) erzeugte Gewichtskraft-Komponente der zum Kurvenmittelpunkt gerichteten Kraft entgegenwirkt.

2. Tragrollenstation nach Anspruch 1,
**dadurch gekennzeichnet,**
**daß** die Seitenführungselemente (10, 10'; 11, 11') Rollen sind, die um eine senkrecht zur Förderhauptebene verlaufende Achse (72) drehbar auf den Rahmen (5, 6) angeordnet sind.

3. Tragrollenstation nach Anspruch 1 oder 2,
**dadurch gekennzeichnet,**
**daß** die Seitenführungselemente (10, 10'; 11, 11') relativ zu dem zugeordneten Rahmen (5, 6) beweglich ausgebildet sind, und daß für die auf der Kurveninnenseite angeordneten Seitenführungselemente (10, 10'; 11, 11') ein Umlenkmechanismus (51) vorgesehen ist, der die Seitenführungskräfte dazu verwendet, den jeweiligen Rahmen (5, 6) zu neigen.

4. Tragrollenstation nach Anspruch 3,
**dadurch gekennzeichnet,**
**daß** der Umlenkmechanismus (51) ein Schwenkhebel (52) ist, der an einem Endabschnitt (73) das zugeordnete Seitenführungselement (10, 10'; 11, 11') trägt, am anderen Ende eine drehbar gelagerte Rolle (53) aufweist, die auf einer schiefen Ebene (54) abrollt, und der zwischen dem Endabschnitt (73) und der Rolle (53) einen Schwenkpunkt (55) mit dem Rahmen (5, 6) aufweist.

5. Tragrollenstation nach einem der Ansprüche 1 bis 4,
**dadurch gekennzeichnet,**
**daß** der Rahmen (5) des Obertrums (1) und der Rahmen (6) des Untertrums (2) um eine gemeinsame, in Förderrichtung verlaufende Schwenkachse (7) schwenkbar sind, die zwischen den beiden Rahmen (5, 6) angeordnet ist.

6. Tragrollenstation nach Anspruch 5,
**gekennzeichnet durch**
eine erste Kolben-/Zylinderanordnung (13) für den Rahmen (5) des Obertrums (1) und eine zweite Kolben-/Zylinderanordnung (14) für den Rahmen (6) des Untertrums (2), die jeweils zwischen dem zugeordneten Rahmen (5, 6) und dem Gestell (12) angeordnet sind und ein unabhängiges Verschwenken der beiden Rahmen (5, 6) ermöglichen.

7. Tragrollenstation nach Anspruch 6,
**dadurch gekennzeichnet,**
**daß** jeder Rahmen (5, 6) einen sich vom Boden (15, 16) des entsprechenden Rahmens (5, 6) weg erstreckenden Flansch (17, 18) aufweist, mittels dessen die Rahmen (5, 6) schwenkbar auf der gemeinsamen Schwenkachse (7) sitzen und an denen je eine sich quer zur Schwenkachse (7) erstreckende Hebelstange (19, 20) befestigt ist, deren freies Ende (21, 22) mit der zugeordneten Kolben-/Zylinderanordnung (13, 14) gelenkig gekoppelt ist.

8. Tragrollenstation nach Anspruch 5,
**dadurch gekennzeichnet,**
**daß** die Rahmen (5, 6) starr miteinander verbunden und gemeinsam mittels einer Kolben-/Zylinderanordnung (13) verschwenkbar sind.

9. Tragrollenstation nach einem der Ansprüche 6 bis 8,
**gekennzeichnet durch**
eine elektronische Regelschaltung, die in Abhängigkeit des Ausgangssignals einer Kraftmeßeinrichtung (74), welche die von dem Fördergurt auf die Seitenführungselemente (10, 10'; 11, 11') wirkende Kraft mißt, ein Steuersignal an die zugeordnete Kolben-/Zylinderanordnung (13, 14) abgibt, woraufhin der entsprechende Rahmen (5, 6) verschwenkt wird, um mit der entstehenden Gewichtskraftkomponente der Seitenführungskraft entgegenzuwirken.

10. Tragrollenstation nach Anspruch 1 oder 2,
**dadurch gekennzeichnet,**
**daß** das Gestell (12) pro Trum vier sich quer zur Förderrichtung erstreckende Wangen (23 bis 26; 23' bis 26') aufweist, deren zueinander gewandte Innenseiten je eine Kulisse (27 bis 30; 27' bis 30') aufweisen, welche sich in bezug auf die Förderhauptebene unter einem stumpfen Winkel linear oder bogenförmig erstrecken, und daß der Rahmen (5) des Obertrums (1) und/oder der Rahmen (6) des Untertrums (2) an seinen den Wangen (23 bis 26; 23' bis 26') gegenüberliegenden Endabschnitten (31 bis 34, 31' bis 34') Stummelbolzen (35 bis 38; 35' bis 38') aufweist, mittels derer der zugehörige Rahmen (5, 6) um eine imaginäre, in Förderrichtung verlaufende Schwenkachse verschwenkbar in den Kulissen (27 bis 30; 27' bis 30') gleitend aufgehängt ist.

11. Tragrollenstation nach Anspruch 1 oder 2,
**dadurch gekennzeichnet,**
**daß** die Rahmen (5, 6) wenigstens zwei Schwenkarme (39, 40; 39', 40') aufweisen, und daß die Schwenkarme (39, 40) des Rahmens (5) des Obertrums (1) mit einem Endabschnitt (41, 42) an dem Rahmen (5) und mit dem anderen Endabschnitt (43, 44) an dem Gestell (12) angelenkt sind und die Schwenkarme (39', 40') des Rahmens (6) des Untertrums (2) mit einem Endabschnitt (41', 42') an dem Rahmen (6) und mit dem anderen Endabschnitt (43', 44') wahlweise an dem Gestell (12) oder dem Boden (15) des Rahmens (5) des Obertrums (1) angelenkt sind.

12. Tragrollenstation nach Anspruch 11,
**dadurch gekennzeichnet,**
**daß** die Endabschnitte (41, 42; 41', 42' bzw. 43, 44; 43', 44') der Schwenkarme (39, 40; 39', 40') einen Winkel zueinander einschließen.

13. Tragrollenstation nach Anspruch 12,
**dadurch gekennzeichnet,**
**daß** die am Gestell (12) angelenkten Endabschnitte (43, 44) der Schwenkarme (39, 40) sowie die entweder am Gestell (12) oder am Boden (15) des Obertrumrahmens (5) angelenkten Endabschnitte (43', 44') jeweils zueinander weisen.

14. Tragrollenstation nach Anspruch 13,
**dadurch gekennzeichnet,**
**daß** sich die am Gestell (12) angelenkten Endabschnitte (43, 44; 43', 44') der Schwenkarme (39, 40; 39', 40') überkreuzen.

15. Tragrollenstation nach einem der Ansprüche 11 bis 14,
**dadurch gekennzeichnet,**
**daß** der Rahmen (5) des Obertrums (1) mittels der Schwenkarme (39, 40; 39', 40') an dem Gestell (12) und der Rahmen (6) des Untertrums (2) an dem Rahmen (5) des Obertrums (1) aufgehängt ist.

16. Tragrollenstation nach einem der Ansprüche 11 bis 14,
**dadurch gekennzeichnet,**
**daß** beide Rahmen (5, 6) separat mittels der Schwenkarme (39, 40; 39', 40') an dem Gestell (12) aufgehängt oder gelagert sind.

17. Tragrollenstation nach Anspruch 11,
**dadurch gekennzeichnet,**
**daß** die Schwenkarme (39, 40; 39', 40') zwischen den Böden (15, 16) der Rahmen (5, 6) und je einem Querträger (47, 48) des Gestells (12) angeordnet sind, und daß die Mittellage jedes Rahmens (5, 6) durch eine Balancevorrichtung eingestellt wird.

18. Tragrollenstation nach Anspruch 17,
**dadurch gekennzeichnet,**
**daß** die Balancevorrichtung aus paarweise angeordneten Spiralfedern (45, 46; 49, 50) besteht.

19. Tragrollenstation nach Anspruch 17,
**dadurch gekennzeichnet,**
**daß** die Balancevorrichtung je eine Kolben-/Zylinderanordnung enthält.

20. Verwendung einer Tragrollenstation nach einem der Ansprüche 1 bis 19 als Gurtlenkstation eines konventionellen Fördergurtes im Obertrum oder im Untertrum.

## Claims

1. Idler roller station for the tight side (1) and the slack side (2) of a curved conveyor belt, comprising respective idler rollers (3; 4a, 4b) for the tight side (1) and the slack side (2) and respective frames (5, 6) mounted to swivel about at least one possibly imaginary swivel axis (7; 8, 9; 8', 9') extending in the conveying direction in which the idler rollers (3; 4a, 4b) associated with the tight side (1) and the slack side (2) respectively are each mounted to rotate about an axis extending transversely to the conveying direction, **characterised in that** the frames (5, 6) are mounted in or suspended from a rack (12) and that respective lateral guide elements (10, 10'; 11, 11') are arranged on the frames (5, 6) on the inside of the curve and serve to guide the lateral edges of the tight side (1) and the slack side (2) respectively, the force applied to the lateral guide elements (10, 10'; 11, 11') by the conveyor belt along a conveyor track curve and directed towards the centre of the curve swivelling the frames (5, 6) in such a manner that the weight component produced by the tight side (1) or the slack side (2) counteracts the force directed towards the centre of the curve.

2. Idler roller station according to claim 1, **characterised in that** the lateral guide elements (10, 10'; 11, 11') are rollers arranged on the frames (5, 6) in such a manner that they can rotate about an axis (72) extending perpendicularly to the principal conveying plane.

3. Idler roller station according to claim 1 or claim 2, **characterised in that** the lateral guide elements (10, 10'; 11, 11') are movable relative to the associated frame (5, 6) and that a deflecting mechanism (51) is provided for the lateral guide elements (10, 10'; 11, 11') arranged on the inside of the curve and uses the lateral guiding forces to tilt the respective frame (5, 6) (Fig. 13).

4. Idler roller station according to claim 3, **characterised in that** the deflecting mechanism (51) is a swivelling lever (52) bearing the associated lateral guide element (10, 10'; 11, 11') on one end portion (73) and provided at the other end with a rotatably mounted roller (53) which rolls on an inclined plane (54), and having a pivot point (55) with the frame (5, 6) between the end portion (73) and the roller (53).

5. Idler roller station according to one of claims 1 to 4, **characterised in that** the frame (5) of the tight side (1) and the frame (6) of the slack side (2) can swivel about a common swivel axis (7) extending in the conveying direction arranged between the two frames (5, 6) (Figures 1 to 3).

6. Idler roller station according to claim 5, **characterised by** a first piston/cylinder arrangement (13) for the frame (5) of the tight side (1) and a second piston/cylinder arrangement (14) for the frame (6) of the slack side (2), each being arranged between the associated frame (5, 6) and the rack (12) and allowing for independent swivelling of the two frames (5, 6) (Figures 1 and 2).

7. Idler roller station according to claim 6, **characterised in that** each frame (5, 6) has a flange (17, 18) extending away from the bottom (15, 16) of the corresponding frame (5, 6) by means of which the frames (5, 6) are swivel-mounted on the common swivel axis (7) and to each of which a respective lever rod (19, 20) extending transversely to the swivel axis (7) is fixed, its free end (21, 22) being hinged to the associated piston/cylinder arrangement (13, 14) (Figures 1 and 2).

8. Idler roller station according to claim 5, **characterised in that** the frames (5, 6) are rigidly connected together and can be swivelled together by means of one piston/cylinder arrangement (13) (Fig. 3).

9. Idler roller station according to one of claims 6 to 8, **characterised by** an electronic control circuit which sends a control signal to the associated piston/cylinder arrangement (13, 14) as a function of the output signal of a force-measuring device (74) which measures the force applied to the lateral guide elements (10, 10'; 11, 11') by the conveyor belt, after which the corresponding frame (5, 6) is swivelled in order to counteract the lateral guiding force with the resulting weight component (Fig. 14).

10. Idler roller station according to claim 1 or claim 2, **characterised in that** the rack (12) has four side walls (23 to 26; 23' to 26') extending transversely to the conveying direction per side, the inner faces of which directed towards one another each have a slider (27 to 30; 27' to 30') extending in a linear or arcuate manner at an obtuse angle relative to the principal conveying plane and that the frame (5) of the tight side (1) and/or the frame (6) of the slack side (2) is/are provided on its/their end portion/s (31 to 34; 31' to 34') opposite the side walls (23 to 26; 23' to 26') with stub bolts (35 to 38; 35' to 38') by means of which the associated frame (5, 6) is slidably suspended from the sliders (27 to 30; 27' to 30') in such a manner that it can swivel about an imaginary swivel axis extending in the conveying direction (Figures 4 to 6).

11. Idler roller station according to claim 1 or claim 2, **characterised in that** the frames (5, 6) have at least two swivel arms (39, 40; 39', 40') and that the swivel arms (39, 40) of the frame (5) of the tight side (1) are hinged by means of one end portion (41, 42) to the frame (5) and by means of the other end portion (43, 44) to the rack (12) and the swivel arms (39', 40') of the frame (6) of the slack side (2) are hinged by means of one end portion (41', 42') to the frame (6) and by means of the other end portion (43', 44') either to the rack (12) or to the bottom (15) of the frame (5) of the tight side (1) (Figures 7 to 12).

12. Idler roller station according to claim 11, **characterised in that** the end portions (41, 42; 41', 42' or 43, 44; 43', 44') of the swivel arms (39, 40; 39', 40') include an angle relative to one another (Figures 7, 8; 11, 12).

13. Idler roller station according to claim 12, **characterised in that** the end portions (43, 44) of the swivel arms (39, 40) hinged to the rack (12) and the end portions (43', 44') hinged either to the rack (12) or to the bottom (15) of the tight-side frame (5) are directed towards one another.

14. Idler roller station according to claim 13, **characterised in that** the end portions (43, 44; 43', 44') of the swivel arms (39, 40; 39', 40') hinged to the rack (12) intersect (Figures 11 and 12).

15. Idler roller station according to one of claims 11 to 14, **characterised in that** the frame (5) of the tight side (1) is suspended from the rack (12) by means of the swivel arms (39, 40; 39', 40') and the frame (6) of the slack side (2) is suspended from the frame (5) of the tight side (1) (Figures 7 and 8).

16. Idler roller station according to one of claims 11 to 14, **characterised in that** the two frames (5, 6) are suspended from or mounted on the rack (12) separately by means of the swivel arms (39, 40; 39', 40').

17. Idler roller station according to claim 11, **characterised in that** the swivel arms (39, 40; 39', 40') are arranged between the bottoms (15, 16) of the frames (5, 6) and respective cross members (47, 48) of the racy (12) and that the centre position of each frame (5, 6) is set by a balancing device (Figures 9 and 10).

18. Idler roller station according to claim 17, **characterised in that** the balancing device consists of spiral springs (45, 46; 49, 50) arranged in pairs.

19. Idler roller station according to claim 17, **characterised in that** the balancing device contains respective piston/cylinder arrangements.

20. Use of an idler roller station according to one of claims 1 to 19 as a belt-guiding station in the tight side or the slack side of a conventional conveyor belt.

## Revendications

1. Station à rouleaux porteurs pour le brin supérieur (1) et le brin inférieur (2) d'une courroie de transport courbe, avec, respectivement, un rouleau support (3; 4a, 4b) pour le brin supérieur (1) et pour le brin inférieur (2) et avec, respectivement, un châssis (5, 6) logé de manière à pouvoir pivoter au moins autour d'un axe de pivotement s'étendant dans le sens de transport et, éventuellement, également imaginaire (7; 8, 9; 8', 9') dans lequel les rouleaux supports (3; 4a, 4b) correspondant au brin supérieur (1) ou au brin inférieur (2) sont logés de manière mobile sur un axe, chacun au moyen d'un axe s'étendant transversalement au sens de transport, **caractérisée en ce que** les châssis (5, 6) sont logés ou sont suspendus dans ou près d'une carcasse (12) et **en ce qu'**un élément de guidage latéral (10, 10'; 11, 11') est monté sur le châssis (5, 6) du côté intérieur de la courbe qui sert à guider l'arête latérale du brin supérieur (1) ou du brin inférieur (2), moyennant quoi la force s'exerçant par l'intermédiaire de la courroie de transporteur sur les éléments de guidage latéral (10, 10'; 11, 11') dans une courbe de chemin de transport et dirigée vers le point central de la courbe provoque un pivotement des châssis (5, 6) de manière à ce que la composante de poids produite par le brin supérieur (1) ou le brin inférieur (2) s'oppose à la force dirigée vers le point central de la courbe.

2. Station à rouleaux porteurs selon la revendication 1, **caractérisée en ce que** les éléments de guidage latéral (10, 10'; 11, 11') sont des rouleaux qui sont montés sur le châssis (5, 6) de manière à pivoter autour d'un axe (72) s'étendant verticalement par rapport au plan principal de transport.

3. Station à rouleaux porteurs selon la revendication 1 ou 2, **caractérisée en ce que** les éléments de guidage latéral (10, 10'; 11, 11') sont conçus de manière mobile par rapport au châssis (5, 6) correspondant et **en ce qu'**un mécanisme déflecteur (51) est prévu pour les éléments de guidage latéral (10, 10'; 11, 11') montés du côté intérieur de la courbe qui utilise les forces du guidage latéral pour incliner le châssis respectif (5, 6) (figure 13).

4. Station à rouleaux porteurs selon la revendication 3, **caractérisée en ce que** le mécanisme déflecteur (51) est un levier pivotant (52) qui supporte l'élément de guidage latéral (10, 10'; 11, 11') correspondant à une section d'extrémité (73), qui comporte, à l'autre extrémité, un rouleau (53) logé de manière à pivoter qui roule sur un plan incliné (54) et qui comporte un point de pivotement (55) avec le châssis (5, 6) entre la section d'extrémité (73) et le rouleau (5").

5. Station à rouleaux porteurs selon l'une des revendications 1 à 4, **caractérisée en ce que** le châssis (5) du brin supérieur (1) et le châssis (6) du brin inférieur (2) peuvent pivoter autour d'un axe de pivotement (7) commun s'étendant dans le sens de transport qui est placé entre les deux châssis (5, 6) (figures 1 à 3).

6. Station à rouleaux porteurs selon la revendication 5, **caractérisée par** un premier ensemble piston/cylindre (13) pour le châssis (5) du brin supérieur (1) et par un deuxième ensemble piston/cylindre (14) pour le châssis (6) du brin inférieur (2) qui sont respectivement montés entre le châssis correspondant (5, 6) et la carcasse (12) et qui permettent un pivotement indépendant des deux châssis (5, 6) (figures 1 et 2).

7. Station à rouleaux porteurs selon la revendication 6, **caractérisée en ce que** chaque châssis (5, 6) comporte une bride (17, 18) s'étendant à partir du plancher (15, 16) du châssis correspondant (5, 6) au moyen de laquelle les châssis (5, 6) reposent de manière à pivoter autour de l'axe de pivotement commun (7) et sur lesquels est fixée une tige de levier (19, 20) s'étendant transversalement à l'axe de pivotement (7) dont l'extrémité libre (21, 22) est accouplée par articulation à l'ensemble piston/cylindre correspondant (13, 14) (figures 1 et 2).

8. Station à rouleaux porteurs selon la revendication 5, **caractérisée en ce que** les châssis (5, 6) sont connectés rigidement l'un à l'autre et peuvent pivoter ensemble au moyen d'un ensemble piston/cylindre (13) (figure 3).

9. Station à rouleaux porteurs selon l'une des revendications 6 à 8, **caractérisée par** un élément de réglage électronique qui, en fonction du signal de sortie d'un capteur de force (74) qui mesure la force exercée par l'intermédiaire de la courroie de transport sur les éléments de guidage latéral (10, 10'; 11, 11'),
envoie un signal de commande à l'ensemble piston/cylindre (13, 14) correspondant, après quoi le châssis correspondant (5, 6) pivote pour s'opposer, avec la composante de poids produite, à la force du guidage latéral (Figure 14).

10. Station à rouleaux porteurs selon la revendication 1 ou 2, **caractérisée en ce que** la carcasse (12) comporte, par brin, quatre faces (23 à 26; 23' à 26') s'étendant transversalement au sens de transport dont les côtés intérieurs tournés l'un vers l'autre comportent chacun une coulisse (27 à 30; 27' à 30') qui s'étendent linéairement ou en forme d'arc par rapport au plan principal de transport selon un angle obtus et **en ce que** le châssis (5) du brin supérieur (1) et/ou le châssis (6) du brin inférieur (2) est pourvu de boulons de tronçon (35 à 38; 35' à 38') sur ses sections d'extrémité (31 à 34; 31' à 34') opposés aux faces (23 à 26; 23' à 26') au moyen desquels le châssis correspondant (5, 6) est suspendu de manière à coulisser pour pivoter dans les coulisses (27 à 30; 27' à 30') autour d'un axe de pivotement imaginaire s'étendant dans le sens de transport (figures 4 à 6).

11. Station à rouleaux porteurs selon la revendication 1 ou 2, **caractérisée en ce que** les châssis (5, 6) comportent au moins deux bras pivotants (39, 40; 39', 40') et **en ce que** les bras pivotants (39, 40) du châssis (5) du brin supérieur (1) sont articulés sur le châssis (5) par une section d'extrémité (41, 42) et sur la carcasse (12) par l'autre section d'extrémité (43, 44) et les bras pivotants (39', 40') du châssis (6) du brin inférieur (2) sont articulés sur le châssis (6) par une section d'extrémité (41', 42') et, au choix, sur la carcasse (12) ou sur le plancher (15) du châssis (5) du brin supérieur (1) par l'autre section d'extrémité (43', 44') (figures 7 à 12).

12. Station à rouleaux porteurs selon la revendication 11, **caractérisée en ce que** les sections d'extrémité (41, 42; 41', 42' ou 43, 44; 43', 44') des bras pivotants (39, 40; 39', 40') forment ensemble un angle inclus (figures 7, 8; 11, 12).

13. Station à rouleaux porteurs selon la revendication 12, **caractérisée en ce que** les sections d'extrémité (43, 44) des bras pivotants (39, 40) articulées sur la carcasse (12) ainsi que les sections d'extrémité (43', 44') articulées soit sur la carcasse (12) soit sur le plancher (15) du châssis (5) du brin supérieur se font face.

14. Station à rouleaux porteurs selon la revendication 13, **caractérisée en ce que** les sections d'extrémité (43, 44; 43', 44') des bras pivotants (39, 40; 39', 40') articulées sur la carcasse (12) se croisent (figures 11 et 12).

15. Station à rouleaux porteurs selon l'une des revendications 11 à 14, **caractérisée en ce que** le châssis (5) du brin supérieur (1) est suspendu à la carcasse (12) à l'aide des bras pivotants (39, 40; 39',40') et le châssis (6) du brin inférieur (2) est suspendu au châssis (5) du brin supérieur (1) (figures 7 et 8).

16. Station à rouleaux porteurs selon l'une des revendications 11 à 14, **caractérisée en ce que** les deux châssis (5, 6) sont suspendus à ou logés séparément dans la carcasse (12) à l'aide des bras pivotants (39, 40; 39', 40').

17. Station à rouleaux porteurs selon la revendication 11, **caractérisée en ce que** les bras pivotants (39, 40; 39', 40') sont disposés entre le plancher (15, 16) des châssis (5, 6) et une traverse respective (47, 48) de la carcasse (12) et **en ce que** la position centrale de chaque châssis (5, 6) est réglée par un dispositif d'équilibrage (figure 9, 10).

18. Station à rouleaux porteurs selon la revendication 17, **caractérisée en ce que** le dispositif d'équilibrage est constitué de ressorts spiraux (45, 46; 49, 50) disposés par paires.

19. Station à rouleaux porteurs selon la revendication 17, **caractérisée en ce que** le dispositif d'équilibrage comprend un ensemble piston/cylindre.

20. Utilisation,' selon l'une des revendications 1 à 19, d'une station à rouleaux porteurs comme station de guidage de courroie d'une courroie de transport conventionnelle dans le brin supérieur ou dans le brin inférieur.
